# EUROPÄISCHE PATENTANMELDUNG

(11) **EP 4 439 943 A1**
(43) Veröffentlichungstag der Anmeldung: **02.10.2024**
(21) Anmeldenummer: 23166116.6
(22) Anmeldetag: 31.03.2023
(51) Int. Cl.: H02K 15/00

(54) **ROTOR FÜR ASYNCHRONMOTOR UND VERFAHREN ZUM HERSTELLEN EINES SOLCHEN ROTORS**

(71) Anmelder: Fischer Spindle Group AG, 3360 Herzogenbuchsee (CH)
(72) Erfinder: Tresch, Roger, 4313 Möhlin (CH); Buol, Roland, 7323 Vilters-Wangs (CH)
(74) Vertreter: Hepp Wenger Ryffel AG

(57) **Zusammenfassung**

Offenbart ist Rotor (1) für einen Asynchronmotor. Dieser enthält ein Blechpaket (2) aus einer Mehrzahl von Blechen (3) mit jeweiligen Öffnungen (4), mindestens zwei Kurzschlussringe (5) und eine Mehrzahl von Kurzschlussstäben (6), die sich zwischen den Kurzschlussringen (5) erstrecken und die Öffnungen (4) der Bleche (3) durchdringen. Die Kurzschlussringe (5) derart mit den Kurzschlussstäben (6) verschweisst sind, dass die jeweiligen Schweissnähte in radialer Richtung und/oder in axialer Richtung von aussen nach innen mindestens 50 % der Planfläche der Kurzschlussstäbe (6) umfassen. Ebenfalls offenbart ist ein Verfahren zum Herstellen eines solchen Rotors (1) für einen Asynchronmotor. Das Verfahren enthält die Schritte a) Hindurchstecken der Kurzschlussstäbe (6) durch die Öffnungen (4) der Bleche (3); b) Aufstecken der Kurzschlussringe (5) auf die Enden (8) der Kurzschlussstäbe (6); c) optional: Stauchen der Kurzschlussstäbe (6), insbesondere über ihre Elastizitätsgrenze hinaus; d) Verschweissen der Kurzschlussringe (5) mit den Kurzschlussstäben (6).

## Beschreibung

Die vorliegende Erfindung befasst sich mit Rotoren für Asynchronmotoren und Verfahren zum Herstellen solcher Rotoren.

Asynchronmotoren enthalten einen feststehenden Stator und einen sich relativ dazu drehenden Rotor. Eine übliche Bauform des Rotors ist ein Kurzschlussrotor. Dieser verfügt über ein Blechpaket mit einer Mehrzahl von Blechen und eine Mehrzahl von elektrisch leitfähigen Kurzschlussstäben, welche an beiden Enden des Rotors über einen Kurzschlussring elektrisch kurzgeschlossen sind.

Ein gattungsgemässer Rotor ist im Dokument EP 2 782 222 B1 offenbart. Die Kurzschlussringe enthalten dort jeweils ein Scheibenpaket, welches lagenweise aus Scheiben mit Ausnehmungen aufgebaut ist, durch welche die Enden der Kurzschlussstäbe hindurchtreten. Um die Kurzschlussringe und die Kurzschlussstäbe radial miteinander verschweissen zu können, muss die Schweissstelle zugänglich gemacht werden. Zu diesem Zweck sind Fasen und Stufen vorgesehen, durch die die Schweisseinrichtung eingeführt werden kann.

Diese Konstruktion der Kurzschlussringe ist jedoch baulich aufwendig. Zudem ist diese Bauart der Kurzschlussringe aufgrund der auftretenden Fliehkräfte für sehr hohe Drehzahlen ungeeignet.

Es ist eine Aufgabe der vorliegenden Erfindung, einen Rotor für einen Asynchronmotor bereitzustellen, der die genannten Nachteile nicht aufweist. Insbesondere soll der Rotor leicht herstellbar und auch für sehr hohe Drehzahlen geeignet sein.

Gelöst werden diese und weitere Aufgaben durch einen erfindungsgemässen Rotor für einen Asynchronmotor. Dieser enthält ein Blechpaket aus einer Mehrzahl von Blechen mit Öffnungen, mindestens zwei Kurzschlussringe sowie eine Mehrzahl von Kurzschlussstäben, die sich zwischen den Kurzschlussringen erstrecken und die Öffnungen der Bleche durchdringen. Insbesondere können genau zwei oder genau vier Kurzschlussringe vorhanden sein.

Erfindungsgemäss sind die beiden Kurzschlussringe derart mit den Kurzschlussstäben verschweisst, dass die jeweiligen Schweissnähte in radialer Richtung von aussen nach innen mindestens 50 %, bevorzugt mindestens 70 %, besonders bevorzugt mindestens 90 % der Planfläche der Kurzschlussstäbe umfassen. Alternativ oder zusätzlich können erfindungsgemäss die jeweiligen Schweissnähte in axialer Richtung von aussen nach innen mindestens 50 %, bevorzugt mindestens 70 %, besonders bevorzugt mindestens 90 % der Planfläche der Kurzschlussstäbe umfassen.

Die Schweissnaht ist damit tiefer als im Stand der Technik. Somit kann eine einzige durchgängige Schweissnaht genügen. Wie sich zudem gezeigt hat, kann auf diese Weise ein grösserer Querschnitt zur Aufnahme von Fliehkräften genutzt werden, sodass die Kurzschlussringe und damit der gesamte Rotor für sehr hohe Drehzahlen geeignet sind. Ausserdem ist die Herstellung einfacher als beispielsweise in EP 2 782 222 B1.

Der Durchmesser der Kurzschlussringe kann durch fachmännische Routineversuche je nach gewünschter Drehzahl gewählt werden.

Die Kurzschlussringe können im allgemeinen Umfang der Erfindung Durchgangslöcher aufweisen, in die die Enden der Kurzschlussstäbe eingesteckt sind. Die Kurzschlussringe können dann durch ein axiales Verschweissen mit den Kurzschlussstäben verbunden werden. Hierfür ist es jedoch erforderlich, dass jeder Kurzschlussstab positionsgenau verschweisst wird, was aufwendig und fehleranfällig ist. Zudem wird die für die mechanische Festigkeit massgebende Wandstärke des Kurzschlussringes durch die durchgängigen axialen Durchgangslöcher geschwächt.

Aus diesen Gründen ist es bevorzugt, wenn die Kurzschlussringe Sacklochbohrungen aufweisen, in die die Enden der Kurzschlussstäbe eingesteckt sind. Auf diese Weise lassen sich die Kurzschlussstäbe relativ zu den Kurzschlussringen definiert und präzise positionieren. Zudem wird eine nochmals erhöhte mechanische Festigkeit erreicht. Sacklochbohrungen mit Tiefen im Bereich des 0,5- bis 1-Fachen des Durchmessers der Kurzschlussstäbe haben sich als geeignet erwiesen.

Das Material der Kurzschlussringe kann Stahl, Aluminium, eine hochfeste, Aluminiumlegierungen, Kupfer oder eine hochfeste Kupferlegierung, beispielsweise Kupfer-Chrom-Zirkon oder Kupfer-Beryllium, enthalten oder daraus bestehen. Diese Materialien verfügen über ein hohes Verhältnis zwischen Festigkeit und Dichte.

Die Kurzschlussstäbe enthalten bei Aluminiumrotoren bevorzugt Reinaluminium oder elektrisch sehr gut leitende Aluminiumlegierungen und bei Kupferrotoren reines Kupfer oder elektrisch sehr gut leitende Kupferlegierungen. Insbesondere können die Kurzschlussstäbe bei Aluminiumrotoren aus Reinaluminium oder elektrisch sehr gut leitenden Aluminiumlegierungen bestehen, und bei Kupferrotoren können sie aus reinem Kupfer oder elektrisch sehr gut leitenden Kupferlegierungen bestehen.

Vorteilhafterweise sind die Kurzschlussstäbe in axialer Richtung über die Elastizitätsgrenze hinaus gestaucht. Hierdurch kann während der Herstellung eine plastische Deformation herbeigeführt werden, die auch nach dem Schweissen erhalten bleibt. Hierdurch können Toleranzen ausgeglichen werden.

Die Bleche des Blechpaketes können eine Dicke im Bereich von 0,1 mm bis 1 mm aufweisen.

Im Weiteren betrifft die Erfindung auch ein Verfahren zum Herstellen eines Rotors für einen Asynchronmotor, so wie er oben erläutert wurde. Das Verfahren enthält die Schritte
a) Hindurchstecken der Kurzschlussstäbe durch die Öffnungen der Bleche;
b) Aufstecken der Kurzschlussringe auf die Enden der Kurzschlussstäbe;
c) optional: Stauchen der Kurzschlussstäbe;
d) Verschweissen der Kurzschlussringe mit den Kurzschlussstäben.

Im optionalen Schritt c) können die Kurzschlussstäbe bleibend gestaucht werden. Zu diesem Zweck können sie über die Elastizitätsgrenze hinaus gestaucht werden. Durch eine solche Stauchung können Längen-Toleranzen der Kurzschlussstäbe vergrössert werden.

Als vorteilhaft hat es sich weiterhin erwiesen, wenn das Verschweissen im Schritt d) durch ein Tiefschweissverfahren erfolgt, wie beispielsweise durch Elektronenstrahlschweissen oder Lasertiefschweissen im Vakuum. Beispielsweise kann das Material beim Lasertiefschweissen auch in der Tiefe aufgeschmolzen werden, und die Schmelzzone kann tiefer als breit sein.

Die Baugruppe aus Kurzschlussringen und Kurzschlussstäben kann vor und/oder im Schritt d) axial vorgespannt werden. Hierdurch kann sichergestellt werden, dass die Enden der Kurzschlussstäbe auf den Böden der Sacklochbohrungen aufliegen.

Vorteilhafterweise erfolgt das Verschweissen in radialer Richtung. Alternativ oder zusätzlich kann das Verschweissen in axialer Richtung erfolgen.

Nachfolgend werden die Erfindung und ihre Vorteile anhand eines Ausführungsbeispiels näher erläutert, welches in den anhängenden

Figuren dargestellt ist. Dabei zeigen
- Figur 1:: einen erfindungsgemässen Rotor in einer Explosionsdarstellung;
- Figur 2:: den Rotor in einer seitlichen Schnittansicht;
- Figuren 3a-d:: einen Kurzschlussring des Rotors in mehreren Ansichten;
- Figur 4a,b:: ein Blech des Rotors in zwei Ansichten.

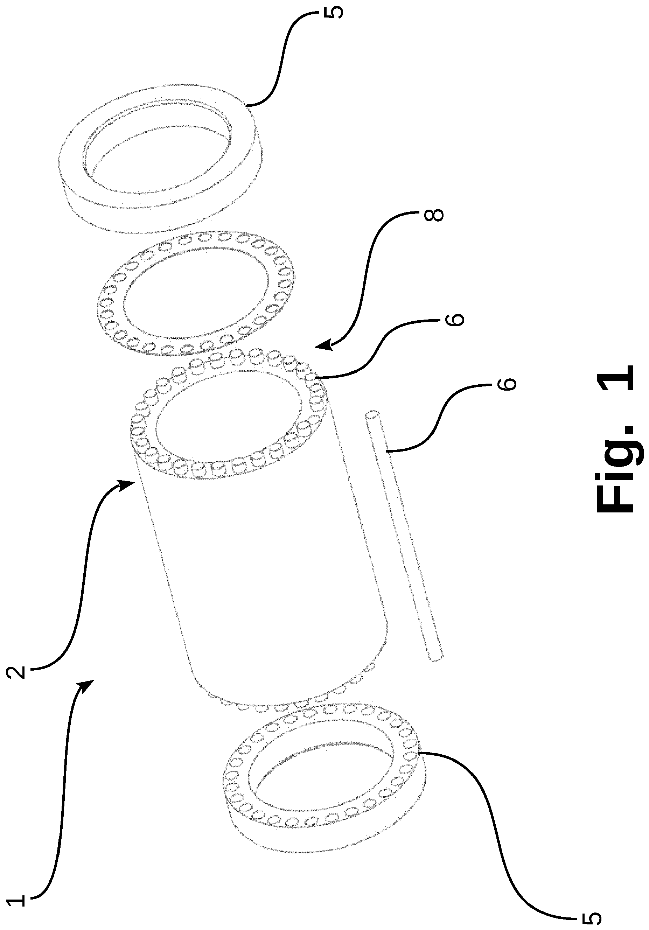

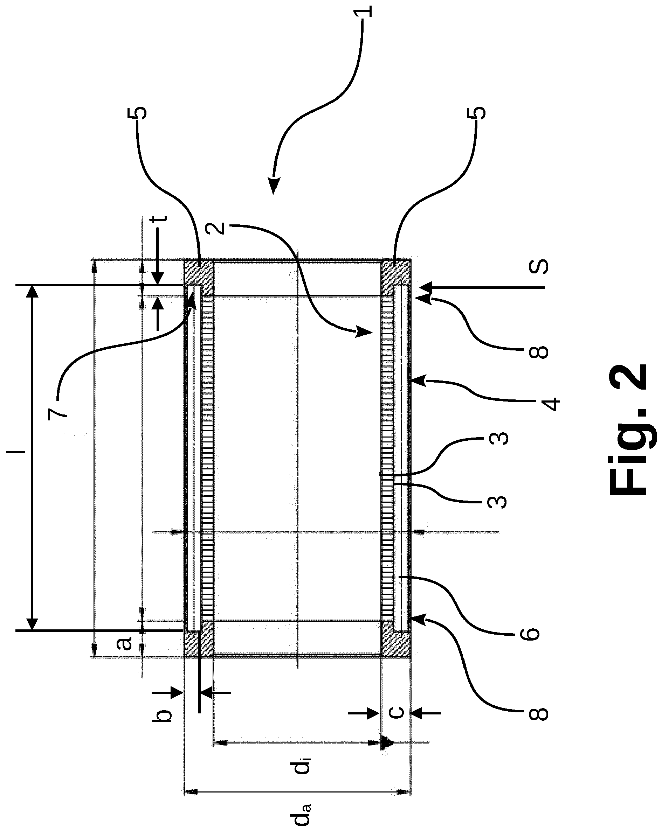

Wie die Figur 1 erkennen lässt, verfügt der erfindungsgemässe Rotor 1 über ein Blechpaket aus einer Mehrzahl von Blechen mit Öffnungen sowie zwei Kurzschlussringe 5. Zur Vereinfachung der Darstellung sind in Figur 1 die Bleche nicht einzeln dargestellt (siehe dazu Figur 2). Die Kurzschlussringe 5 haben in diesem Ausführungsbeispiel eine Länge a = 12 mm, einen Aussendurchmesser dₐ = 65 mm, einen Innendurchmesser dᵢ = 44 mm und somit eine radiale Höhe c = 10,5 mm. Zwischen den Kurzschlussringen 5 und durch die Öffnungen 4 hindurch erstrecken sich mehrere Kurzschlussstäbe 6. Die Kurzschlussringe 5 können in diesem Ausführungsbeispiel aus einer Kupferlegierung und die Kurzschlussstäbe 6 aus weichgeglühtem Kupfer bestehen. Alternativ dazu können die Kurzschlussringe 5 aus einer hochfesten Aluminiumlegierung AW2618 und die Kurzschlussstäbe 6 aus Reinaluminium bestehen.

Die Schnittansicht in Figur 2 lässt die einzelnen Bleche 3 des Blechpaketes 2 erkennen. Die Kurzschlussringe 5 verfügen in diesem Ausführungsbeispiel über Sacklochbohrungen 7 mit einer Tiefe t = 3,5 mm, in die die Enden 8 der Kurzschlussstäbe 6 eingesteckt sind. Die Kurzschlussstäbe haben eine Länge l = 97 mm und einen Durchmesser b = 4,6 mm. Die Schweissnähte 9 umfassen die gesamte Planfläche 10 der Kurzschlussstäbe 6.

Zur Herstellung des Rotors 1 können zunächst die Kurzschlussstäbe 6 durch die Öffnungen 4 der Bleche 3 hindurchgesteckt werden. Anschliessend werden die Kurzschlussringe 5 auf die Enden 8 der Kurzschlussstäbe 6 aufgesteckt. Anschliessend wird die daraus entstandene Baugruppe aus Kurzschlussringen 5 und Kurzschlussstäben 6 in axialer Richtung vorgespannt, wodurch die Kurzschlussstäbe 6 gestaucht werden. Daraufhin werden die Kurzschlussringe 5 durch ein Tiefschweissverfahren miteinander verschweisst, und zwar in radialer Richtung. Mit dem Pfeil S ist schematisch der Schweisseintrag dargestellt, der zur Bildung der Schweissnaht 9 führt.

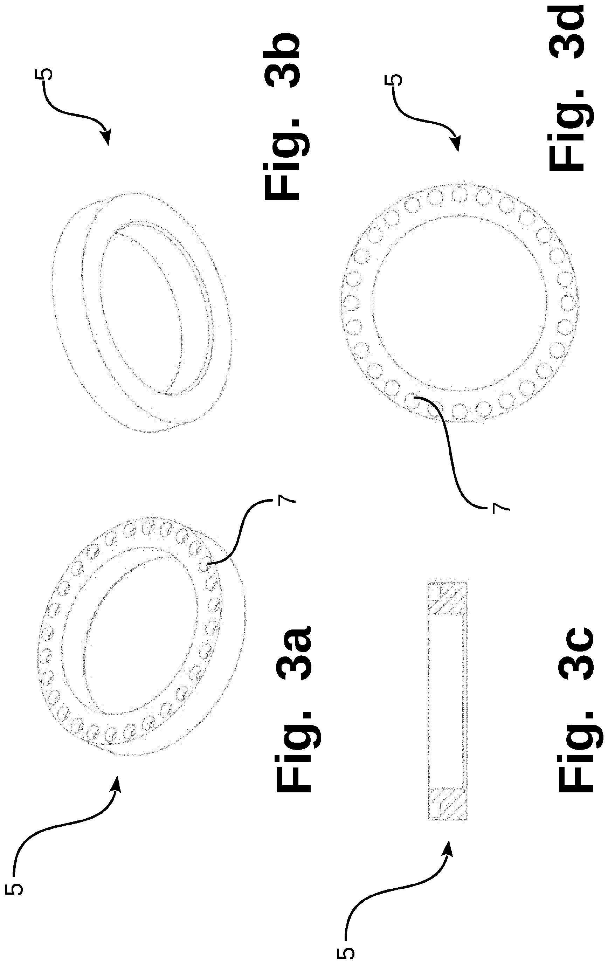

In den Figuren 3a bis 3d ist einer der beiden Kurzschlussringe 5 dargestellt, die über eine Vielzahl von Sacklochbohrungen 7 verfügen, in die die Enden 8 der Kurzschlussstäbe 6 eingesteckt werden.

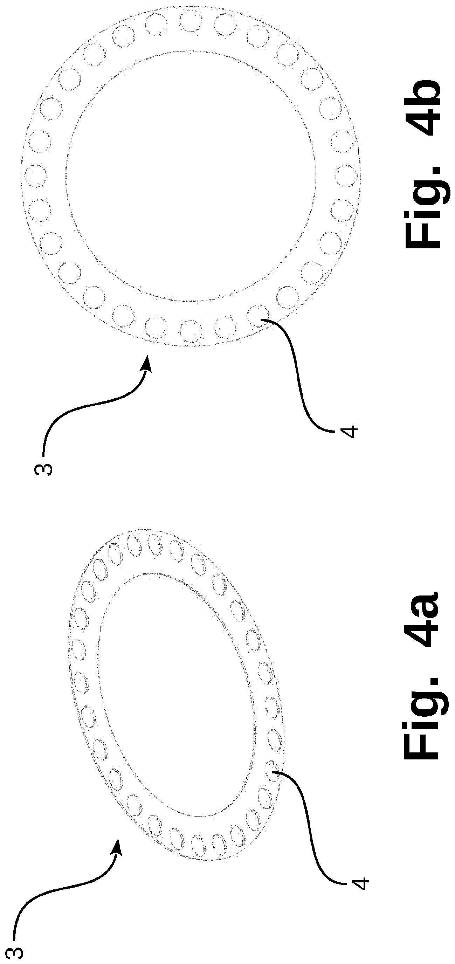

Die Figuren 4a und 4b zeigen eines der Bleche 4 des Rotors, welches eine Vielzahl von Öffnungen 4 enthalten, welche von den Kurzschlussstäben 6 durchdrungen sind.

## Patentansprüche

1. Rotor (1) für einen Asynchronmotor, enthaltend
- ein Blechpaket (2) aus einer Mehrzahl von Blechen (3) mit jeweiligen Öffnungen (4),
- mindestens zwei, insbesondere genau zwei oder genau vier, Kurzschlussringe (5) und
- eine Mehrzahl von Kurzschlussstäben (6), die sich zwischen den Kurzschlussringen (5) erstrecken und die Öffnungen (4) der Bleche (3) durchdringen,
**dadurch gekennzeichnet, dass**
die Kurzschlussringe (5) derart mit den Kurzschlussstäben (6) verschweisst sind, dass die jeweiligen Schweissnähte (9) in radialer Richtung und/oder in axialer Richtung von aussen nach innen mindestens 50 %, bevorzugt mindestens 70 %, besonders bevorzugt mindestens 90 % der Planfläche (10) der Kurzschlussstäbe (6) umfassen.

2. Rotor (1) gemäss Anspruch 1,
wobei die Kurzschlussringe (5) Sacklochbohrungen (7) aufweisen, in die die Enden (8) der Kurzschlussstäbe (6) eingesteckt sind.

3. Rotor (1) gemäss einem der Ansprüche 1 und 2,
wobei die Kurzschlussstäbe (6) in axialer Richtung über die Elastizitätsgrenze hinaus gestaucht sind.

4. Verfahren zum Herstellen eines Rotors (1) für einen Asynchronmotor gemäss einem der vorangehenden Ansprüche, enthaltend die Schritte
a) Hindurchstecken der Kurzschlussstäbe (6) durch die Öffnungen (4) der Bleche (3);
b) Aufstecken der Kurzschlussringe (5) auf die Enden (8) der Kurzschlussstäbe (6);
c) optional: Stauchen der Kurzschlussstäbe (6), insbesondere über ihre Elastizitätsgrenze hinaus;
d) Verschweissen der Kurzschlussringe (5) mit den Kurzschlussstäben (6).

5. Verfahren gemäss Anspruch 4,
wobei die Baugruppe aus Kurzschlussringen (5) und Kurzschlussstäben (6) vor und/oder im Schritt d) axial vorgespannt wird.

6. Verfahren gemäss einem der Ansprüche 4 und 5,
wobei das Verschweissen im Schritt d) durch ein Tiefschweissverfahren erfolgt, wie beispielsweise durch Elektronenstrahlschweissen oder Lasertiefschweissen im Vakuum.

7. Verfahren gemäss einem der Ansprüche 4 bis 6,
wobei das Verschweissen im Schritt d) in radialer und/oder in axialer Richtung erfolgt.
